Europäisches Patentamt

European Patent Office

Office européen des brevets

(11) Veröffentlichungsnummer: **0 199 932**
**A2**

# (12) EUROPÄISCHE PATENTANMELDUNG

(21) Anmeldenummer: 86102962.7

(22) Anmeldetag: 06.03.86

(51) Int. Cl.⁴: **C 04 B 30/00**

(30) Priorität: 03.05.85 DE 3515872

(43) Veröffentlichungstag der Anmeldung:
05.11.86 Patentblatt 86/45

(84) Benannte Vertragsstaaten:
AT BE CH DE FR GB IT LI LU NL SE

(71) Anmelder: SEGLIWA GmbH Fabrik elektrotechnischer
Isolierstoffe
Daimlerring 1
D-6200 Wiesbaden-Nordenstadt(DE)

(72) Erfinder: Seibel, Dieter, Dipl.-Ing.
Brunnenstrasse 3
D-6200 Wiesbaden(DE)

(74) Vertreter: Weber, Dieter, Dr. et al,
Dr. Dieter Weber und Klaus Seiffert Patentanwälte
Gustav-Freytag-Strasse 25 Postfach 6145
D-6200 Wiesbaden 1(DE)

(54) Abdichtungsmaterial.

(57) Ein auch hohen Betriebstemperaturen widerstehendes Abdichtungsmaterial zum Abdichten von Flächen gegeneinander, die wenigstens zeitweilig hohen Temperaturen ausgesetzt werden, ist dadurch gekennzeichnet, daß es ein Formling ist, der wenigstens teilweise aus einem anorganischen, durch Erhitzen unter Auflockerung seiner Struktur expandierbaren Material besteht.

EP 0 199 932 A2

Abdichtungsmaterial

— — — — — — — — — — — — — — — — — — — —

Die Erfindung betrifft ein Abdichtungsmaterial zum Abdichten von Flächen gegeneinander, die wenigstens zeitweilig hohen Temperaturen ausgesetzt werden.

Bei lösbaren Verbindungen, bei denen eine Fläche gegen eine andere abgedichtet werden muß, wie beispielsweise bei Flanschverbindungen, tritt häufig das Problem auf, daß bei erhöhten Betriebstemperaturen die Dichtwirkung des Abdichtungsmaterials nachläßt, da bestimmte Werkstoffteile, wie im Falle von Flanschverbindungen die Verbindungsschrauben, sich thermisch ausdehnen und damit die notwendige Flächenpressung auf die Dichtung nicht mehr gegeben ist.

Zur Überwindung dieses Problems ist es bekannt, den Abdichtungsmaterialien Elastomere zuzusetzen, die dem Abdichtungsmaterial Elastizität, d. h. reversible Kompressibilität, verleihen. Solche Abdichtungsmaterialien werden zwischen den abzudichtenden Flächen komprimiert. Bei Erwärmen und Nachlassen der Flächenpressung dehnen sich die komprimierten elastischen Abdichtungsmaterialien aus und füllen dadurch nach wie vor den Raum zwischen den abzudichtenden Flächen. Solche Abdichtungsmaterialien können jedoch nur bis zu mittleren Betriebstemperaturen, wie etwa 500 °C, eingesetzt werden, da bei höheren Betriebstemperaturen die Elastomerzusätze zersetzt werden, wodurch das Abdichtungsmaterial seine Dichtwirkung verliert.

Für Betriebstemperaturen oberhalb 500 °C gibt es bislang keine asbestfreien Abdichtungsmaterialien, die die Dichtwirkung bei hohen Betriebstemperaturen behalten. In solchen Betriebsfällen muß daher wegen der mangelnden Rückfederung des Abdichtungsmaterials die notwendige Flächenpressung durch mechanisches Nachstellen (Anziehen der Schraubenverbindungen) aufrechterhalten werden, wie beispielsweise dann, wenn mit einem sprunghaften Anstieg des Druckes des in einer Rohrleitung oder einem Behälter befindlichen Mediums bei steigender Temperatur zu rechnen ist.

Die der Erfindung zugrundeliegende Aufgabe bestand somit darin, ein Abdichtungsmaterial zu bekommen, das Flächen auch bei wenigstens zeitweilig hohen Betriebstemperaturen, wie insbesondere solchen oberhalb 500 °C, dauerhaft und ohne Nachstellen der Flächenpressung gegeneinander abdichtet.

Diese Aufgabe wird erfindungsgemäß durch ein Abdichtungsmaterial gelöst, das dadurch gekennzeichnet ist, daß es ein Formling ist, der wenigstens teilweise aus einem anorganischen, durch Erhitzen unter Auflockerung seiner Struktur expandierbaren Material besteht. Unter Auflockerung der Struktur wird dabei auch gegebenenfalls ein Aufschäumen verstanden.

Diese Abdichtungsmaterialien werden zwischen die gegeneinander abzudichtenden Flächen gelegt und durch Gegeneinanderpressen der abzudichtenden Flächen unter solche Flächenpressung gesetzt, daß bis zur Temperatur einsetzender Expansion eine ausreichende Dichtung gewährleistet ist. Wenn die Betriebstemperaturen steigen, expandiert dann das Abdichtungsmaterial und füllt den durch Lockerung infolge von Wärmeausdehnung vergrößerten Raum zwischen den gegeneinander abzudichtenden Flächen erneut aus. Dadurch und durch einen gewissen Rückfederungseffekt bleibt mit den erfindungsgemäßen Abdichtungsmaterialien die Dichtbeziehung auch bei hohen Betriebstemperaturen bestehen.

Die Auswahl des expandierbaren Materials für das Abdichtungsmaterial wird so getroffen, daß die Expansion bei einer Temperatur oder darunter einsetzt, bei der mit einem Nachlassen der Dichtungswirkung des unexpandierten Abdichtungsmaterials gerechnet werden muß.

In bestimmten Fällen kann es hingenommen werden, daß das expandierbare Material eine vollreversible Expansion hat, d. h. bei Rückgang der Betriebstemperatur auf Normalbedingungen sich wieder voll auf das Ursprungsvolumen zurückzieht. Bevorzugt ist es aber, daß das expandierbare Material eine höchstens teilweise reversible Expansion hat, d. h. auch bei Rückgang der Betriebstemperatur wenigstens teilweise expandiert bleibt, da hierdurch die Dichtwirkung auch bei geringeren Betriebstemperaturen erhöht wird. Da das Abdichtungsmaterial gewöhnlich beim Senken der Betriebstemperaturen keinem zu hohen Druck ausgesetzt werden soll, um beispielsweise nicht aus dem Raum zwischen den abzudichtenden Flächen herausgedrückt zu werden, ist es besonders bevorzugt, daß das expandierbare Material eine teilreversible Expansion aufweist. Teilreversible Expansion bedeutet dabei, daß das thermisch expandierte Material bei Druckbelastung sich nicht mehr vollständig in seinen ursprünglichen Zustand komprimieren läßt. Es besitzt dann einen gewissen Rückfederungseffekt.

Wenn hier von gegeneinander abzudichtenden Flächen die Rede ist, so kommen dabei beliebig geformte Flächen in Betracht, wie beispielsweise ebene Flächen, wie sie in Flanschverbindungen auftreten, gekrümmte Flächen, wie bei der Dichtung eines Dornes mit kreisförmigem Querschnitt innerhalb einer Ringhülse, oder Flächen mit Vorsprüngen oder Vertiefungen. Entsprechend kann der Abdichtungsmaterialformling nach der Erfindung auch beliebige Form haben, die dem jeweiligen Verwendungszweck angepaßt ist, wie für den Fachmann auf der Hand liegt.

Eine bevorzugte Stoffgruppe zur Verwendung als expandierbares Material nach der Erfindung besteht aus Mineralien, die sich beim Erhitzen unter Auflockerung der chemischen Struktur ausdehnen. Zu diesen thermisch expandierbaren Mineralien gehören vor allem Phyllosilicate, in denen die $SiO_4$-Tetraeder jeweils in einer Ebene miteinander verbunden sind und so Schichtengitter bilden. Typisch für einige dieser Phyllosilicate ist es, daß ihre chemisch oder physikalisch miteinander verbundenen Kristallschichten bei höheren Temperaturen sich voneinander lösen, wobei sich die Kristallstruktur bzw. das Kristallgefüge aufweitet und das Material ein wesentlich größeres Volumen als im unerhitzten Zustand einnimmt.

Solchermaßen thermisch expandierbare Phyllosilicate sind beispielsweise Hydroglimmer und der Vermiculit, die durch geologische Umwandlung des Glimmers entstehen, sowie Blähschiefer und der Pyrophyllit. Zwischen dem reinen, thermisch praktisch nicht expandierbaren Glimmer und den oben genannten thermisch expandierbaren Phyllosilicaten gibt es eine Reihe geologischer Zwischenprodukte und Zwischenstufen, die sich mehr oder weniger thermisch ausdehnen lassen.

Je nach der erforderlichen Form und Dicke des erwünschten Abdichtungsmaterials können die Formlinge ausschließlich aus diesem expandierbaren Mineral bestehen. Bei komplizierter geformten oder dickeren Formlingen dagegen ist es zweckmäßig, Schichten des thermisch expandierbaren Materials mit einem anorganischen Bindemittel, wie einem Alkaliwasserglas, aneinander zu binden.

Neben der erfindungsgemäß zweckmäßig zu verwendenden Gruppe der thermisch expandierbaren Mineralien, besonders der thermisch expandierbaren Phyllosilicate, besteht eine weitere besonders günstige Materialgruppe aus den thermisch expandierbaren anorganischen Gläsern. Solche Silicatgläser, die kleine Wassereinschlüsse oder Hydroxylgruppen enthalten, haben die Eigenschaft, beim Erreichen einer bestimmten Temperatur aufzuschäumen und dabei ein vergrößertes Volumen einzunehmen. Beispiele solcher thermisch expandierbaren Gläser sind die Alkaliwassergläser, besonders Natronwasserglas, die Alkaliborate und verschiedene vulkanische Gläser, wie die Perlite, zu denen unter anderem die Liparit- oder Quarzporphyrgläser gehören.

Noch eine weitere Gruppe von thermisch expandierbaren Materialien, die für die erfindungsgemäßen Abdichtungsmaterialien verwendet werden können, sind in ihrer Struktur mechanisch auflockerbare Trägermaterialien, die mit wenigstens einem thermisch unter Bildung gasförmiger Stoffe zersetzbaren Stoff imprägniert sind. Solche in der Struktur auflockerbaren Trägermaterialien sind beispielsweise mineralische Papiere, wie Glimmerpapiere, und unter Zersetzung gasförmiger Stoffe für die Imprägnierung geeignete Verbindungen sind beispielsweise Oxalsäure, Ammoniumoxalat oder Ammoniumsalze der Ameisen- und Essigsäure, die sich alle beim Erhitzen unter Bildung von Wasser und Kohlendioxid zersetzen. Diese beim Erhitzen gebildeten gasförmigen Stoffe, wie Wasserdampf und Kohlendioxid, lockern die Trägerstruktur derart auf, daß sich in Bezug auf die Volumenvergrößerung und Kompressibilität ein ähnlicher Effekt wie bei den oben beschriebenen Mineralien und Gläsern ergibt.

Aufbauend auf der bisher dargelegten technischen Lehre können die Abdichtungsmaterialien unterschiedlich aufgebaut sein. So können sie beispielsweise allein aus dem expandierbaren anorganischen Material bestehen, oder dieses kann auf wenigstens einer Trägermaterialschicht aufgebracht sein, die ihrerseits nicht expandierbar sein muß. Vorzugsweise bringt man das expandierbare Material zwischen wenigstens zwei Trägermaterialschichten, die das Abdichtungsmaterial nach den Oberflächen hin verfestigen. Das expandierbare Material kann mit den Trägermaterialschichten mit Hilfe eines anorganischen Bindemittels, wie Alkaliwasserglas, verbunden werden. Das Trägermaterial kann beispielsweise aus Glimmerpapier, Glasgewebe, Glasvlies oder irgendeinem anderen anorganischen mechanisch relativ beständigen Material bestehen. Bei Verwendung mehrerer Trägermaterialschichten können diese entweder nur auf den beiden Außenseiten des Formlings aufgebracht sein oder schichtweise mit dem expandierbaren Material alternieren.

Damit bei der Aufbringung des expandierbaren Materials auf den Trägermaterialschichten entweder das flüssige Bindemittel, wie Wasserglaslösung, oder flüssig aufzubringendes expandierbares Material das Trägermaterial nicht vollständig durchdringt, ist es zweckmäßig, auf der dem expandierbaren Material bzw. dem Bindemittel abgekehrten Seite des Trägermaterials eine Schicht eines Abdichtungsstoffes, wie beispielsweise eine Siliconharzlösung, aufzubringen. Durch einen solchen Stoff wird das Trägermaterial flexibel. Außerdem dichtet das Material gegen Eindiffundieren von $CO_2$ aus der Luft ab, was besonders bei Verwendung von Wasserglas als expandierbares Material oder Bindemittel von Vorteil ist, da $CO_2$ sich mit Wasserglas zu Kieselsäure und Natriumcarbonat umsetzt. Bevorzugt ist der Abdichtungsstoff ein solcher, der sich beim Erhitzen wenigstens teilweise zu $CO_2$, $H_2O$ und/oder Kieselsäure zersetzt, ohne daß größere Kohlenstoffrückstände entstehen. Die Imprägnierung mit dem flexibel machenden Stoff kann auch nach der Aufbringung des expandierbaren Materials und/oder weiterer Trägermaterialschichten erfolgen. In diesem Fall erfolgt die Herstellung des Abdichtungsmaterials nach der Erfindung beispielsweise und zweckmäßig folgendermaßen:

Trägermaterialien in der Form von Glimmerpapieren, Glasgewebern oder Glasvliesen werden mit einer Wasserglaslösung bestrichen und zu zwei- oder mehrlagigen Verbundmaterialien verklebt und getrocknet. Anschließend werden diese Verbundmaterialien mit einer Siliconharzlösung getränkt und erneut getrocknet. Zweckmäßig werden Siliconharze als Abdichtungsmaterialien verwendet, die auch im getrockneten Zustand elastisch bleiben.

Das so hergestellte Verbundmaterial expandiert beim Erhitzen über 100 °C je nach Menge des aufgenommenen Wasserglases, ohne seinen Verbund zu verlieren. Wird ein solches Material zwischen zwei abzudichtende Flächen, wie in eine Flanschverbindung, gespannt, so wird oberhalb 100 °C zusätzlich ein Preßdruck aufgebaut, der auch bei absinkender Temperatur nicht mehr ganz zurückgeht. Hierdurch wird ein erhöhter permanenter Abdichtungseffekt erzielt.

Besonders zweckmäßig ist es, verschiedene expandierbare Materialien miteinander zu kombinieren, und zwar insbesondere solche, deren Expansion bei unterschiedlichen Temperaturen einsetzt. Diese unterschiedlichen expandierbaren Materialien kann man in Schichten miteinander verbinden oder mit Hilfe eines anorganischen Bindemittels, wie Wasserglas, ineinander gemischt miteinander binden. Da das Alkaliwasserglas, insbesondere Natronwasserglas, selbst ein expandierbares Material ist, ist dieses in die Überlegungen bezüglich der Kombination expandierbarer Materialien einzubeziehen. Ein solches Material kann also aus einer Wasserglasmatrix mit darin verbundenen Teilchen anderer expandierbarer Materialien, wie von Hydroglimmern, Smektit, Vermiculit, Pyrophyllit oder Perlit, sein, oder diese anderen Materialien können in Schichten vorliegen, die durch Wasserglas miteinander verbunden sind. Beim Erhitzen dieses Materialverbundes dehnt sich zunächst das Wasserglas durch Aufschäumen aus, wonach bei verschiedenen Temperaturen stufenweise die Expansion der übrigen expandierbaren Materialien einsetzt. So kann man eine stufenweise Ausdehnung des Abdichtungsmaterials bei steigenden Temperaturen erreichen.

Als Bindemittel können statt der Alkalisilicate (Wasserglas) auch beispielsweise Borate oder Phosphate verwendet werden.

Weiterhin kann es zweckmäßig sein, die expandierbaren Materialien in dem Abdichtungsmaterial in unterschiedlicher Menge vorzusehen, um an unterschiedlichen Stellen beim Erhitzen unterschiedliche Dicke und damit Preßdrücke zu erzielen. Am einfachsten erreicht man dies, indem man eine Trägermaterialschicht verwendet und auf dieser das expandierbare Material in unterschiedlichen Mengen pro Flächeneinheit aufbringt.

Obwohl wie erwähnt der Abdichtungsmaterialformling nach der Erfindung unterschiedlichste Form haben kann, besteht er zweckmäßig aus einem Flächengebilde, wie einer Scheibe oder einem Plättchen, da solche Dichtungsformen am häufigsten verwendet werden.

Beispiel 1

Zwei Lagen von Muskovit-Glimmerpapier mit einer Dicke von 0,1 mm wurden einseitig mit Natronwasserglas dünn bestrichen, sodann miteinander verklebt und 4 h bei 90 °C getrocknet.

Anschließend wurde die so hergestellte Verbundfolie in eine 20 %ige Lösung von Siliconharz in Aceton eingetaucht und nach dem Herausnehmen 6 h bei 90 °C getrocknet. Die Dicke dieses Abdichtungsmaterials lag bei 0,21 mm.

Das so hergestellte Abdichtungsmaterial wurde langsam auf 600 °C erhitzt. Ab etwa 100 °C vergrößerte sich die Dicke auf 0,4 mm und blieb bis zur Endtemperatur von 600 °C konstant.

Unter einer Presse wurde das expandierte Abdichtungsmaterial 30 sec mit einem Druck von 20 N/mm² belastet. Die Enddicke nach dem Pressen betrug 0,36 mm. Das Pressen wurde weitere neun Male bei gleicher Druckbelastung wiederholt und ergab eine Enddicke von 0,33 mm.

Beispiel 2

Eine Lage Muskovit-Glimmerpapier mit einer Dicke von 0,1 mm wurde einseitig mit Natronwasserglas bestrichen. Anschließend wurden auf die noch feuchte Oberfläche Vermiculitschuppen aufgepreßt. Sodann wurden die so aufgeklebten Vermiculitschuppen wiederum mit Wasserglas bestrichen und mit einem zweiten einseitig mit Wasserglas bestrichenen Muskovit-Glimmerpapier abgedeckt. Das ganze wurde zusammengepreßt und 5 h bei 90 °C getrocknet. Die Dicke des getrockneten Verbundstoffes lag bei 0,42 mm.

Dieses Abdichtungsmaterial wurde wiederum langsam auf 600° C erhitzt. Ab 100 °C begann das Wasserglas aufzuschäumen, ab etwa 350 °C dehnte sich der Vermiculit aus. Dabei expandierte die Schichtdicke auf 1,6 mm und blieb bis zur Endtemperatur von 600 °C konstant.

Unter einer Presse wurde der expandierte Verbundstoff mit einem Druck von 20 N/mm² belastet. Die Schichtdicke betrug danach 0,70 mm. Nach weiteren neun gleichen Druckbelastungen ergab sich eine Dicke von 0,68 mm.

Beispiel 3

Eine Lage Phlogopit-Glimmerpapier (Dicke 0,1 mm) wurde einseitig mit Natronwasserglas bestrichen. Anschließend wurde auf die noch feuchte Oberfläche Perlit von einer Korngröße 0 - 100 µm aufgepreßt. Sodann wurden die so aufgeklebten Perlitteilchen wiederum mit Wasserglas bestrichen und mit einem zweiten einseitig mit Wasserglas bestrichenen Phlogopitpapier abgedeckt, zusammengepreßt und 5 h bei 90 °C getrocknet. Die Dicke des getrockneten Verbundstoffes lag bei 0,43 mm.

Dieses Abdichtungsmaterial wurde langsam auf 900 °C erhitzt. Ab 100 °C begann das Wasserglas aufzuschäumen, bei ca. 700 °C zerfiel dieser Schaum weitgehend, bei 850 bis 900 °C blähte der Perlit auf und expandierte die Schichtdicke auf 0,77 mm.

Unter einer Presse wurde der expandierte Verbundstoff mit einem Druck von 20 N/mm² belastet. Die Schichtdicke betrug danach 0,60 mm. Nach weiteren neun gleichen Druckbelastungen ergab sich eine Dicke von 0,54 mm.

Patentansprüche

—  —  —  —  —  —  —  —  —  —  —  —  —  —  —  —  —

1. Abdichtungsmaterial zum Abdichten von Flächen gegeneinander, die wenigstens zeitweilig hohen Temperaturen ausgesetzt werden, dadurch gekennzeichnet, daß es ein Formling ist, der wenigstens teilweise aus einem anorganischen, durch Erhitzen unter Auflockerung seiner Struktur expandierbaren Material besteht.

2. Abdichtungsmaterial nach Anspruch 1, dadurch gekennzeichnet, daß es wenigstens teilweise aus wenigstens einem beim Erhitzen expandierenden Mineral, vorzugsweise einem thermisch expandierbaren Phyllosilicat besteht, das zweckmäßig mit einem anorganischen Bindemittel gebunden ist.

3. Abdichtungsmaterial nach Anspruch 1, dadurch gekennzeichnet, daß es wenigstens teilweise aus einem thermisch expandierbaren anorganischen Glas, vorzugsweise einem Alkaliwasserglas oder Perlit, besteht.

4. Abdichtungsmaterial nach Anspruch 1, dadurch gekennzeichnet, daß es wenigstens teilweise aus einem in seiner Struktur auflockerbaren Trägermaterial besteht, das mit wenigstens einem thermisch unter Bildung gasförmiger Stoffe zersetzbaren Stoff imprägniert ist.

5. Verdichtungsmaterial nach einem der Ansprüche 1 bis 4, dadurch gekennzeichnet, daß das thermisch expandierbare Material eine teilweise reversible Expansion hat.

6. Abdichtungsmaterial nach einem der Ansprüche 1 bis 5, dadurch gekennzeichnet, daß es das expandierbare Material auf wenigstens einer Trägermaterialschicht, vorzugsweise zwischen wenigstens zwei Trägermaterialschichten angeordnet aufweist.

17. Abdichtungsmaterial nach Anspruch 6, dadurch gekennzeichnet, daß die Trägermaterialschichten wenigstens teilweise, vorzugsweise auf ihrer dem expandierbaren Material abgekehrten Seite mit einem Abdichtungsstoff, vorzugsweise einem Siliconharz, imprägniert sind.

8. Abdichtungsmaterial nach einem der Ansprüche 1 bis 7, dadurch gekennzeichnet, daß das expandierbare Material aus einer Kombination unterschiedlicher expandierbarer Stoffe besteht, deren Expansion bei unterschiedlichen Temperaturen einsetzt.

9. Abdichtungsmaterial nach einem der Ansprüche 1 bis 8, dadurch gekennzeichnet, daß das expandierbare Material auf den Trägermaterialschichten in unterschiedlicher Menge pro Flächeneinheit aufgebracht ist.